# EUROPÄISCHE PATENTANMELDUNG

(11) **EP 4 331 854 A1**
(43) Veröffentlichungstag der Anmeldung: **06.03.2024**
(21) Anmeldenummer: 23193949.7
(22) Anmeldetag: 29.08.2023
(51) Int. Cl.: B41J 29/393

(54) **VERFAHREN ZUM VORHERSAGEN EINES WARTUNGSZUSTANDES EINER DRUCKMASCHINE**

(30) Priorität: 01.09.2022 DE 102022122203
(71) Anmelder: Canon Production Printing Holding B.V., 5914 HH Venlo (NL)
(72) Erfinder: Wüstner, Christoph, 81927 München (DE)
(74) Vertreter: Schaumburg und Partner Patentanwälte mbB

(57) **Zusammenfassung**

Bei einem Verfahren zum Vorhersagen eines Wartungszustandes einer Druckmaschine an einem bestimmten Zeitpunkt werden folgende Schritte durchgeführt:
a) Messen mehrerer aufeinanderfolgende Prozesswerte eines Prozessparameters, welcher ein Indikator für die Funktionstüchtigkeit der Druckmaschine ist,
b) Bestimmen mehrerer aufeinanderfolgende Streuungswerte, welche die Streuung der gemessenen Prozesswerte innerhalb eines vorbestimmten Zeitbereiches beschreiben,
c) Bestimmen eines lokalen Streuungsminimums der Streuungswerte,
d) Bestimmen einer Basislinie, indem ein Basislinienwert festgelegt wird, der mit dem Wert des Prozessparameters zum Zeitpunkt des lokalen Minimums korreliert und der sich bis zu einer erneuten Bestimmung einer Basislinie nicht ändert, und
e) Bestimmung eines Gesundheitswertes an einem bestimmten Zeitpunkt mit einer vorbestimmten Relation des Prozesswerte zu dem Basislinienwert zu diesem Zeitpunkt,
wobei beim Überschreiten eines vorbestimmten Schwellwertes durch den Gesundheitswert dies als Wartungszustand beurteilt wird.

## Beschreibung

Die vorliegende Erfindung betrifft ein Verfahren zum Vorhersagen eines Wartungszustandes einer Druckmaschine.

Bei Druckmaschinen, gerade bei Hochleistungsdruckmaschinen kann ein Ausfall zu einem enormen wirtschaftlichen Schaden führen. Hierbei muss nicht zwangsweise die gesamte Maschine ausfallen, es reicht, wenn ein einzelnes Element, beispielsweise die Pumpe für die Tinte versagt. So können ab einem bestimmten Zeitpunkt Druckaufträge nicht oder nur schlecht gedruckt werden. Diese nicht oder schlecht gedruckten Aufträge können zum Teil erst im Nachhinein festgestellt werden. Eine Unterbrechung des Druckvorganges ist dann nur mit einer erheblichen Verzögerung möglich. So entsteht ein erheblicher Ausschuss von Papier, welches auch als Makulatur bezeichnet wird. Zudem verursacht die Stillstandzeit, welche durch die Reparatur des ausgefallenen Teils, zum Beispiel der Pumpe, entsteht, zu erheblichen Produktionskosten.

Für einen reibungslosen Verlauf ist es somit wichtig, den Zustand der Druckmaschine, insbesondere deren einzelnen Elemente, zu kennen, um solche Ausfallzeiten zu minimieren.

Traditionell wird eine Druckmaschine, bzw. die einzelnen Teile, in regelmäßigen Abständen gewartet. Der Zustand der Druckmaschine wird dann erst während der Wartung erkannt. Im Zweifelsfall werden wartungsanfällige Bestandteile eingebaut, ohne dass der Zustand des alten Bestandteils überhaupt bekannt ist. Dieser Ansatz führt zu häufigen Stillstandzeiten und nicht notwendigen Kosten durch einen nicht erforderlichen Austausch.

Bei sogenannten Predictive Maintenance Systemen (PdM-Systemen) wurde dieses Problem erkannt und es wird versucht, die Ausfallwahrscheinlichkeit der einzelnen Systemteile über diverse Sensorsysteme vorauszuberechnen. Hierdurch kann der Austausch und die vorbeugenden Maßnahmen geplant werden, bevor ein Ausfall auftritt. Ein Nutzer profitiert so von einer erhöhten Verfügbarkeit während der Produktionszeit.

In bestehenden Predicitve Maintenance Systemen muss jedoch den Werten, die von den Sensoren ausgegeben werden, eine Ausfallwahrscheinlichkeit zugeordnet werden. Oft ist es auch nicht möglich, für eine Produktreihe eine gleichmäßige Zuordnung bereitzustellen, da die Parameter zum Teil von vielen Faktoren abhängen, die nur zum Teil einer Ausfallwahrscheinlichkeit zuzuordnenbar sind. Als Beispiel ist hier die Betriebstemperatur zu nennen. So mag die Betriebstemperatur einer Maschine A am Nordpolarmeer bei 18 °C Normalbetrieb anzeigen und bei 25 °C auf einen Ausfall hindeuten, während eine baugleiche Maschine am Äquator bei diesen 25 °C Normaltemperatur aufweist und erst bei 30 °C auf einen Ausfall hindeutet.

Das Erkennen und Einstellen der richtigen Parameterwerte, um einen Ausfall vorhersagen zu können, bedarf häufig auch mehrerer Betriebszyklen, die durch einen Fachmann überwacht werden müssen. Dies ist sehr zeitaufwendig und kann durch eine potentielle mangelnde Verfügbarkeit an Fachpersonal auch zu Unterbrechungen führen und ist kostenintensiv.

Der Erfindung liegt die Aufgabe zugrunde, ein Verfahren zum Vorhersagen eines Wartungszustandes einer Druckmaschine zu schaffen, mit dem auf einfache Art und Weise der Wartungszustand zuverlässig vorhergesagt werden kann.

Die Aufgabe wird durch den Gegenstand des unabhängigen Anspruchs gelöst. Vorteilhafte Weiterbildungen und bevorzugte Ausführungsformen bilden den Gegenstand der Unteransprüche. Bei einem Verfahren zum Vorhersagen eines Wartungszustandes einer Druckmaschine an einem bestimmten Zeitpunkt werden folgende Schritte durchgeführt:
a) Messen mehrerer aufeinanderfolgende Prozesswerte eines Prozessparameters, welcher ein Indikator für die Funktionstüchtigkeit der Druckmaschine ist,
b) Bestimmen mehrerer aufeinanderfolgende Streuungswerte, welche die Streuung der gemessenen Prozesswerte innerhalb eines vorbestimmten Zeitbereiches beschreiben,
c) Bestimmen eines lokalen Streuungsminimums der Streuungswerte,
d) Bestimmen einer Basislinie, indem ein Basislinienwert festgelegt wird, der mit dem Wert des Prozessparameters zum Zeitpunkt des lokalen Minimums korreliert und der sich bis zu einer erneuten Bestimmung einer Basislinie nicht ändert, und
e) Bestimmung eines Gesundheitswertes an einem bestimmten Zeitpunkt mit einer vorbestimmten Relation des Prozesswerte zu dem Basislinienwert zu diesem Zeitpunkt,
   wobei beim Überschreiten eines vorbestimmten Schwellwertes durch den Gesundheitswert dies als Wartungszustand beurteilt wird.

Der Streuungswert ist ein Maß dafür, wie konstant die Prozesswerte sind.

Sind die Prozesswerte über einen längeren Zeitraum konstant, kann davon ausgegangen werden, dass dieser Zustand der Druckmaschine erwünscht ist und eine Wartung nicht unmittelbar bevorsteht.

Ein Extrema, wie ein Minimum oder ein Maximum bezieht sich im Folgenden, sofern nicht anders angegeben, auf ein Streuungsextrem, bzw. ein Streuungsminimum oder ein Streu Streuungsmaximum.

Das Minimum der Streuungswerte impliziert, dass die Prozesswerte über eine gewisse Zeit konstant sind. Würden die Prozesswerte nicht konstant sein, so würden sich die Prozesswerte voneinander unterscheiden und ein Streuungswert wäre größer als bei Prozesswerten, die konstant sind.

Der Wertebereich, wo die Prozesswerte konstant sind, sind somit ein sehr guter Indikator dafür, dass kein Wartungszustand vorliegt.

Dieser konstante Bereich kann dann als Basislinie automatisch vom System festgelegt werden.

Hierdurch ist es nicht erforderlich, dass ein Fachmann die Basislinie selbst bestimmt, da dies durch das Verfahren automatisch geschieht.

Des Weiteren wird hierdurch für jede Druckmaschine ein gleiches Verfahren verwendet. Unterschiede, die zum Beispiel durch unterschiedliche Verfahren der unterschiedlichen Fachpersonen entstehen, oder weil eine Fachperson bis zum gewissen Grad die Basislinie willkürlich, nach "Bauchgefühl" setzt, können hier weniger Ausfälle entstehen, die durch ein falsches Setzen der Basislinie entstehen. Personen, die keine fachliche Ausbildung zum Setzen von Basislinien gehabt haben, werden somit auch nicht in die Versuchung geführt, trotz fehlender Ausbildung eine Basislinie zu bestimmen.

Verschlechtert sich der Zustand der Druckmaschine, wird sich auch der Prozesswert ändern. Er entfernt sich dann immer weiter von dem vorab festgelegten Basislinienwert. Der Abstand von dem Prozesswert zu dem Basislinienwert wird als Gesundheitswert bezeichnet, wobei der Gesundheitswert die Relation des Prozesswertes zu dem Basislinienwert angibt. Die Relation gibt an, in welchem Verhältnis der Prozesswert zu dem Basislinienwert ist, wobei Verhältnis hier nicht zwangsweise als Quotient zu verstehen ist, sondern eine allgemeine Beziehung dieser beiden Werte darstellt.

Überschreitet der Gesundheitswert einen vorbestimmten Schwellwert beurteilt das System dies automatisch als einen Wartungszustand. Überschreiten ist hier so zu verstehen, dass der vorbestimmte Schwellwert auch unterschritten werden kann. Überschreiten ist hierbei als ein Überqueren, Überqueren oder Traversieren zu verstehen.

Durch die Einfachheit des Verfahrens kann es bei einer Vielzahl von Druckmaschinen eingesetzt werden. Es ist nicht auf eine bestimmte Art von Druckmaschinen beschränkt.

Das physikalische Prinzip, auf dem das Verfahren beruht, liegt darin, dass eine gewisse Zeit, bevor die Druckmaschine bzw. Teile der Druckmaschine ausfallen, sich der überwachende Prozesswert des Prozessparameters ändert. Dies kann beispielsweise sich in einer Betriebstemperatur ergeben oder durch eine veränderte Stromaufnahme.

Ein Ausfall der Druckmaschine, bzw. eines Teils einer Druckmaschine kann beispielsweise durch altersbedingten Verschleiß, aber auch zum Beispiel durch verstopfte Filter oder allgemein durch Verschmutzung entstehen. Mit diesem Verfahren kann Ausfall der Druckmaschine unabhängig von der Ursache vorhergesagt werden.

Der Vorteil des vorliegenden Verfahrens liegt nun darin, dass ein System, welches das Verfahren ausführt, lediglich einen Prozessparameter misst und anhand der gemessenen Prozesswerte selbstständig erkennen kann, ob ein Wartungszustand vorliegt oder nicht, das heißt, ob die Druckmaschine gesund ist oder nicht. Eine Eichung oder Kalibrierung durch einen Fachmann, der entscheidet, ob und wann der Prozesswert in einem gesunden Bereich liegt, ist hier nicht nötig.

Nach einer Wartung können somit eine zur ursprünglichen unterschiedliche Basislinie ermittelt werden. Einschwingvorgänge und sowie Änderungen an Komponenten, die die Charakteristik des Systems beeinflussen (bspw. neuer Motor, oder Tausch eines Verschleißteiles), können durch das hier beschriebene Verfahren berücksichtigt werden.

Vorzugsweise wird vor der Bestimmung des lokalen Streuungsminimums (Schritt c) ein lokales Streuungsmaximum Steuerungswerte bestimmt, wobei, wenn kein Maximum erkannt wurde, der früheste Zeitpunkt in den Strahlungswerten als Maximum festgelegt wird, und das zu bestimmende Streuungsminimum zeitlich nach dem Maximum kommt.

Dass das zu bestimmende Streuungsminimum zeitlich nach dem Maximum kommt, ist hier so zu verstehen, dass es nur für das Verfahren mit den Schritten A bis E verwendet wird. Wird das Verfahren hintereinander mehrfach ausgeführt, kann natürlich ein Streuungsminimum vor einem Streuungsmaximum liegen.

Ein Streuungsmaximum ist dann gegeben, wenn Prozesswerte in einem kurzen Zeitraum sich sehr stark ändern. Dies kann beispielsweise durch eine Wartung geschehen, bei der ein Bauteil der Druckmaschine ausgetauscht wird, sodass die Druckmaschine anschließend direkt nach der Wartung andere Prozesswerte ausgibt als direkt vor der Wartung. Ein solcher Sprung, der durch die Wartung entsteht, erzeugt ein Streuungsmaximum.

Ein Streuungsmaximum kann somit als Indikator einer Wartung sein. Wurde ein Streuungsmaximum erkannt, sollte das entsprechende Verfahren starten, um ein Streuungsminimum zu detektieren, eine Basislinie zu erkennen und Gesundheitswerte zu berechnen, um einen erneuten Wartungszustand vorhersagen zu können.

Wird das Verfahren initial angewendet, kann es sein, dass es bisher kein Maximum gibt. Der Startzeitpunkt ist somit dann als Maximum festzulegen.

Vorzugsweise wird das Verhältnis des Prozesswertes zu dem Basislinienwert zur Bestimmung des Gesundheitswertes gegeben durch:
- die Differenz der beiden Werte,
- durch eine nichtlineare Funktion oder
- durch Zuordnung aus einer vorab hinterlegten Tabelle.

Die Differenz gibt den einfachsten Fall an. Der Gesundheitswert korreliert dann mit dem Prozesswert, sodass eine Änderung von beispielsweise von 10 zu 20 % eine gleiche Differenz aufweist wie zwischen 80 und 90 %.

Eine nichtlineare Funktion kann beispielsweise durch eine logarithmische oder exponentielle Funktion gegeben sein. Hierbei spiegelt eine Änderung des Gesundheitswertes von 20 auf 10 % eine andere Änderungsdifferenz als bei einem Wechsel von 90 zu 80 %.

Dies kann dann sinnvoll sein, wenn zum Beispiel in einem schmalen Bereich von Prozesswerten die Druckmaschine in keinem Wartungszustand liegt, aber eine Änderung aus diesem schmalen Bereich kurzfristig einen Wartungszustand hervorrufen kann. Dieser Bereich des Wartungszustandes kann dann sehr groß sein, bis es zu einem totalen Ausfall der Druckmaschine kommt.

Um diese unterschiedlichen Bereiche darstellen zu können, muss die Zuordnung bzw. das Verhältnis nicht linear sein.

Die Zuordnung kann auch durch eine vorab hinterlegte Tabelle erfolgen. Hierbei sind die entsprechenden Werte der Basislinie und von verschiedenen Prozesswerten in der Tabelle hinterlegt und ein Gesundheitswelt kann aus dieser Tabelle abgelesen werden.

Des Weiteren ist es denkbar, so auch verschiedenste Funktionen darzustellen. Grundsätzlich ist es zum Beispiel auch möglich, dass es verschiedene Bereiche gibt, in der Prozessparameter keinen Wartungszustand indizieren, dafür andere Bereiche, die dazwischen liegen, einen Wartungszustand implizieren.

Gemäß einer Ausführungsform ist der Streuungsparameter die Standardabweichung.

Die Standardabweichung ist ein üblicher Parameter zur Bestimmung der Streuung und ist in vielen Programmen und Systemen bereits integriert, sodass eine Umsetzung des Verfahrens hier keine zusätzliche Programmierung benötigt.

Es ist auch denkbar andere Streuungsparameter zu verwenden, wie beispielsweise die Varianz.

Vorzugsweise werden die Prozesswerte nach einem EWMA-(exponentially weighted moving average) Algorithmus geglättet.

Bei einem solchen exponentiell gewichteten geglätteten Durchschnittswert werden jüngere Datenpunkte stärker gewichtet als weiter zurückliegende, d. h. je weiter die Werte in der Vergangenheit zurückliegen, desto geringer ist ihr Einfluss.

Dies führt dazu, dass zum einen die Kurven geglättet ausgegeben werden, aber Veränderungen, die einen Wartungszustand initiieren könnten, nicht durch die Mittelung herausgeglättet werden. Indikatoren für Wartungszustände werden in diesem Verfahren trotzdem rechtzeitig dargestellt.

Die typische Halbwertszeit für die Glättung sollte vorzugsweise acht Zyklen betragen. Bei einer höheren Anzahl ist zwar die Kurve glatter, reagiert aber langsamer auf einzelne Ausreißer und eventuell einzelne auftretende Extrema in den Prozesswerten könnten zu stark geglättet werden.

Die Mittelung sollte derart eingestellt werden, dass eine gute Balance zwischen Glättung und ausreichender Schärfe der Prozesswerte eingestellt wird.

Vorzugsweise stellt der bestimmte Bereich die letzten Werte im Vergleich zu dem bestimmten Zeitpunkt dar, vorzugsweise die letzten 10.000 Werte, vorzugsweise die letzten 1.000 Werte, vorzugsweise die letzten 100 Werte und insbesondere vorzugsweise die letzten 10 Werte.

Die für das Verfahren benötigte Anzahl hängt auch davon ab, wie häufig gemessen wird. Wird beispielsweise nur dreimal am Tag gemessen und der Bereich soll 100 Werte umfassen, so beträgt die zeitliche Dauer des Bereiches 33 Tage. Dies kann unter Umständen zu lange sein. Wird aber auf der anderen Seite pro Minute ein Wert aufgenommen, so ist die zeitliche Dauer des Bereiches gerade einmal 1 Stunde 20, dass unter Umständen zu niedrig ist.

Die Fenstergröße sollte derart gewählt werden, um signifikante Anstiege bzw. Abfälle komplett zu erfassen. So kann der Streuungsparameter die Extrema (maximal und minimal) am wirkungsvollsten bestimmen.

Ist die zeitliche Dauer zu lang, kann es sein, dass die Kurve der Prozessparameter zu langsam auf Veränderungen reagiert.

Vorzugsweise wird, wenn mehrere Minima erkannt wurden, ein Minimum festgesetzt, in dem das zeitlich älteste Minimum gewählt wird, oder in dem das Minimum gewählt wird, bei dem der dazu korrespondierende Prozesswert auf eine gesündere Maschine hinweist.

Eine gesunde Maschine im Sinne der vorliegenden Erfindung ist eine Druckmaschine, deren Gesundheitswert nahe dem Optimum liegt. Je gesünder eine Druckmaschine ist, desto mehr liegt der Gesundheitswert nahe dem Optimum. Je ungesünder eine Druckmaschine ist, desto eher liegt ein Wartungszustand vor und desto eher droht die Maschine auszufallen.

Wird das zeitlich älteste Minimum gewählt, so kann frühzeitig ein Wartungszustand erkannt werden.

Wird ein Minimum gewählt, bei dem der dazu korrespondierende Prozesswert auf eine gesündere Maschine hinweist, wird die Basislinie entsprechend nahe dem optimalen Wert für die Maschine für den Prozessparameter gewählt.

Gemäß einer Ausführungsform kann das Minimum unter einem bestimmten Schwellwert liegen, wobei dieser Schwellwert, sofern der Streuungsparameter der Standardabweichung entspricht, vorzugsweise einer Standardabweichung von 10, vorzugsweise einer Standardabweichung von 5 und insbesondere einer Standardabweichung von 2 entspricht.

Durch die Festlegung des Schwellwertes wird sichergestellt, dass kein fehlerhaftes Minimum gewählt wird. Ein fehlerhaftes Minimum kann zum Beispiel dazu führen, dass ein falscher Basislinienwert gewählt wird und dadurch der Gesundheitswert falsch oder unzureichend berechnet wird.

Eine Standardabweichung von 10, vorzugsweise eine Standardabweichung von 5 und insbesondere eine Standardabweichung von 2 hat sich als einen ausreichenden Schwellwert zur Bestimmung des Minimum in Experimenten ergeben. Vorzugsweise wird der Gesundheitswert durch Multiplikation mit einem vordefinierten Skalierungsfaktor normiert, wodurch der Gesundheitswert bei 100 eine normal funktionierende Druckmaschine angibt und ein niedrigerer Wert auf eine bevor stehenden Wartungsausfall der Druckmaschine hinweist.

Bei einem anderen niedrigeren Wert kann auch ein Wartungsausfall selber vorliegen.

Der Gesundheitswert kann auch auf andere Werte normiert werden, wie beispielsweise 1.000,10.000, 1.000.000 oder 10 oder 1.

Sollte es nicht möglich sein absolute Werte für das Minimum bzw. für das Maximum anzugeben, so hat sich 1% der erwarteten Basislinie als Startpunkt für die Maximaschwelle bewährt. So hat sich für die Minimum-Schwelle 0,5 bis 1 % der erwarteten Basislinie als Startpunkt bewährt.

Gemäß einer Weiterbildung kann das Verfahren unterschiedliche Wartungszustände mit unterschiedlich vorbestimmten Schwellwerten aufweisen.

Die unterschiedlichen Wartungszustände können hier unterschiedliche Gefährdungsstufen bzw. Wahrscheinlichkeiten eines Ausfalls der Druckmaschine oder eines Teils der Druckmaschine zugeordnet sein.

So ist es zum Beispiel denkbar, dass bei einem ersten vorbestimmten Schwellenwert ein erster Wartungszustand vorliegt und eine erste Warnung ausgegeben wird, deren kritisches Zeitfenster aber im Bereich von Wochen, wenn nicht gar Monaten liegt.

Bei einer weiteren Verschlechterung des Drucksystems kann ein zweiter Wartungszustand vorliegen, dass eine dringlichere Warnung ausgibt. Hier sollte die Druckmaschine zeitnah gewartet werden. Bei einer noch weiteren Verschlechterung des Systems kann ein dritter Wartungszustand vorliegen, der anzeigt, dass ein Ausfall der Druckmaschine oder eines Teils der Druckmaschine unmittelbar bevorsteht oder bereits erfolgt ist.

Die Erfindung wird nachfolgend beispielhaft anhand den in den Zeichnungen dargestellten Beispielen näher erläutert.

Die Zeichnung zeigt schematisch:
Figur 1 ein Drucksystem mit angeschlossener Auswerteeinheit als Blockschaltbild,
Figur 2a-c zeitlicher Verlauf des Prozessparameter (a), des Streuungswertes (b) und des Gesundheitswertes (c)in entsprechenden Diagramen, und

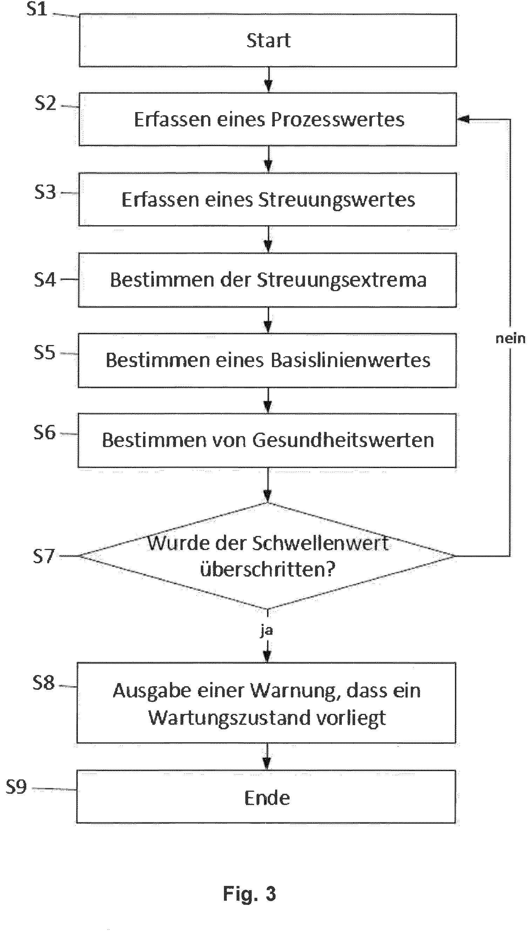

Figur 3 ein Verfahren zum Vorhersagen eines Wartungszustandes einer Druckmaschine als Flußdiagramm.

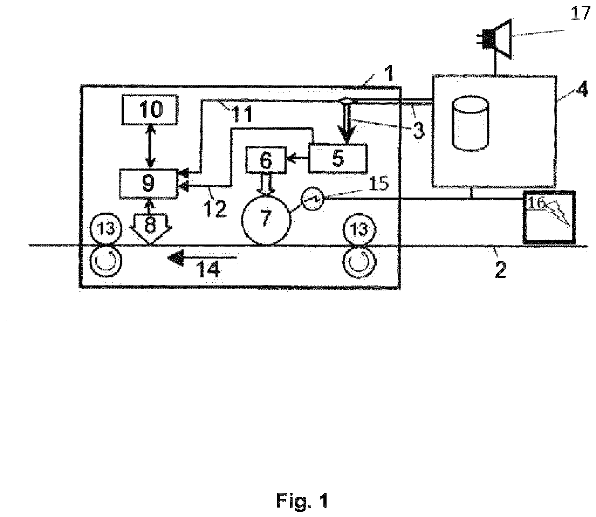

Im Folgenden wird ein Ausführungsbeispiel zur Ausführung eines Verfahrens zum Vorhersagen eines Wartungszustandes einer Druckmaschine 1 zu einem bestimmten Zeitpunkt in Form eines Drucksystems erläutert (Figur 1).

Dieses Drucksystem umfasst eine Druckmaschine 1 zum Bedrucken einer Aufzeichnungsträger 2 auf.

Der Aufzeichnungsträger 2 ist typischerweise eine Endlosbahn. Die Fördereinrichtung kann jedoch auch dazu ausgebildet sein, einzelne Blätter entlang der Förderstrecke zu befördern.

Der Aufzeichnungsträger 2 ist typischerweise Papier. Das Papier kann unterschiedlichste Qualitäten aufweisen. Der Aufzeichnungsträger kann jedoch auch eine Kunststofffolie sein oder ein mit Kunststoff beschichtetes Papier. Im Folgenden wird er auch Papierbahn 2 genannt.

Die Druckmaschine 1 ist in diesem Ausführungsbeispiel eine Hochleistungsdruckmaschine. Als Hochleistungsdruck im Sinne der vorliegenden Erfindung wird die Verwendung eines Druckgerätes verstanden, das zumindest 5 Seiten der Größe DIN A4 pro Sekunde bedrucken kann. Druckgeräte für den Hochleistungsdruck können jedoch auch für höhere Druckgeschwindigkeiten, wie zum Beispiel zumindest 30 Seiten DIN A4 pro Sekunde und insbesondere zumindest 50 Seiten DIN A4 pro Sekunde und vorzugsweise zumindest 90 Seiten DIN A4 pro Sekunde ausgebildet sein. Typischerweise ist ein solches Druckgerät als Tintenstrahldruckgerät oder als elektrophotografisches Druckgerät ausgebildet. Es kann auch ein Druckgerät sein, dessen Druckfarbe Flüssigtoner ist.

Die Druckmaschine 1 ist in diesem Ausführungsbeispiel ein Tintenstrahldruckgerät.

Die Druckmaschine 1 ist über eine Datenleitung 3 mit einem Computer bzw. Druckserver 4 verbunden, von dem die Druckmaschine 1 über die Datenleitung 3 einen Druckdatenstrom empfängt. Der Computer 4 ist entweder ein Druckserver, der den Druckdatenstrom zwischenspeichert oder weiterleitet und gewisse Vorverarbeitungsschritte ausführt oder ein Host, an dem der Druckauftrag und der korrespondierende Druckdatenstrom erzeugt wird. Als Druckdatenstrom wird der für Hochleistungsdrucker typische IPDS (Intelligent Printer Data Stream)-Druckdatenstrom verwendet. Es ist selbstverständlich auch möglich, Druckdatenströme in anderen Formaten, wie zum Beispiel PCL (Print Command Language), PS (Post Script) oder AFP (Advanced Function Presentation) zu verwenden.

In der Druckmaschine 1 führt die Datenleitung 3 zu einem Kontroller 5, in dem die im Druckdatenstrom enthaltenen Druckdaten für einen nachfolgend angeordneten Zeichengenerator aufbereitet werden. Ein Zeichengenerator 6 erzeugt Steuersignale zum Ansteuern eines Druckkopfs 7, mit welchem die Druckdaten auf die Papierbahn 2 gedruckt werden.

Der Kontroller 5 ist weiterhin mit einer nicht gezeigten Gerätesteuerung verbunden, die die verschiedenen Aggregate des Druckgeräts ansteuert, z.B. den Papiertransport, die Elektrofotografie-Einheit, die Fixierstation usw. Weiterhin ist der Kontroller 5 mit einem Bedienfeld verbunden, an dem Systeminformationen angezeigt und über das Einstellungen an der Druckmaschine 1 vorgenommen werden können. Es kann an sich bekannte Mittel wie einen Bildschirm (insbes. Touchscreen), Tastatur und/oder Maus etc. umfassen.

Die Papierbahn 2 ist für Hochleistungsdrucker typischerweise eine Endlospapierbahn. Es sind jedoch auch mittlerweile Druckmaschinen mit sehr hoher Leistung bekannt, die auf Einzelblätter drucken, bei welchen die Anwendung des erfindungsgemäßen Verfahrens auch zweckmäßig ist.

Im Kontroller 5 werden Kontrollzahlen erzeugt und in den Druckdatenstrom eingefügt. Dies wird unten näher erläutert.

Stromabwärts von dem Druckkopf 7 ist angrenzend an der Papierbahn 2 ein Abtast-Sensor 8 zum Abtasten der auf die Papierbahn 2 gedruckten Kontrollzahlen vorgesehen. Werden die Kontrollzahlen in Form von einem Strich- oder Bar-Code gedruckt, so ist der Sensor ein einfacher Fotosensor, der die Helligkeitsunterschiede auf der Papierbahn detektiert. Der Abtast-Sensor 8 ist mit einer Überwachungseinrichtung 9 verbunden, die wiederum an eine zentrale Drucksteuerung 10 gekoppelt ist.

Die Papierbahn 2 wird von einer Fördereinrichtung 13 in Förderrichtung 14 angetrieben.

Der über Datenleitung 3 gelieferte Datenstrom enthält zusätzliche Informationen über den Druckauftrag, wie z.B. Blatt- oder Seitenzahlen, die über eine weitere Datenleitung 11 auch an eine Überwachungseinrichtung 9 geliefert werden. Alternativ dazu können diese zusätzlichen Informationen zunächst nur zum Kontroller 5 geliefert werden, die dieser dann über eine weitere Datenleitung 12 an die Überwachungseinrichtung 9 weiterreicht. Die Datenleitung 11 kann dann entfallen. Es ist in diesem Fall auch möglich, dass der Kontroller 5 die zusätzlichen Informationen über den Druckauftrag selbst generiert und an die Überwachungseinrichtung 9 liefert, falls der Computer 4 keine solchen Informationen zur Verfügung stellt.

Die Druckmaschine 1 weist noch weitere, an sich bekannte, Einheiten, wie zum Beispiel eine Heizstation zum Trocknen des bedruckten Aufzeichnungsträgers auf. Diese weiteren Einheiten sind zur Erläuterung der vorliegenden Erfindung nicht notwendig, weshalb sie nicht in den Zeichnungen dargestellt und in der Beschreibung nicht eingehend erläutert sind.

Die Druckmaschine 1 umfasst des Weiteren einen Sensor 15 zum Messen von Prozesswerten 16 eines Prozessparameters, welcher ein Indikator für die Funktionalität der Druckmaschine 1 ist. Der Sensor 15 ist über eine Datenleitung mit dem Computer 4 verbunden. Die Datenleitung kann identisch mit der Datenleitung 11 sein. Die Daten können über ein Kabel, zum Beispiel ein LAN-Kabel, vom Sensor 15 zum Computer 4 übermittelt werden, es ist aber auch möglich, dass die Prozesswerte 16 drahtlos übertragen werden, zum Beispiel über WiFi, Bluetooth, Zigbee, Z-Wave oder NFC.

Der Prozessparameter ist in diesem Fall die Rotationsgeschwindigkeit eines Pumpenmotors zum Antreiben einer Pumpe zum Pumpen von Tinte zu dem Druckkopf 7 der Druckmaschine 1.

Je langsamer die Pumpe sich dreht, desto wahrscheinlicher ist es, dass die Pumpe verstopft ist und gewartet werden muss.

Alternativ kann auch die Stromaufnahme des Pumpenmotors für Tinte der Druckmaschine 1 überwacht werden.

Je mehr Strom die Pumpe benötigt, desto mehr Energie verbraucht die Pumpe. Bei gleichbleibendem Tintenfluss ist dies ein Indikator über den Gesundheitszustand der Pumpe. Je mehr Strom die Pumpe benötigt, desto wahrscheinlicher ist es, dass die Pumpe selbst verstopft ist und gewartet werden muss.

Das physikalische Prinzip, auf dem das Verfahren beruht, liegt darin, dass eine gewisse Zeit bevor die Pumpe ausfällt, sich die Leistungsfähigkeit der Pumpe ändert. Wenige Tage bevor die Pumpe ausfällt, wird die Pumpe bei gleicher elektrischer Leistung etwas weniger stark pumpen als davor.

Ein Ausfall der Pumpe kann beispielsweise durch altersbedingten Verschleiß, aber auch durch verstopfte Filter entstehen.

Andere Alternativen können Sensoren 15 umfassen, die ein oder mehrere der folgenden Überwachungen durchführen:
- Schwindungsüberwachung,
- Schmiermittel- und Verschleißpartikelanalyse,
- Lager- und Temperaturanalyse,
- Leistungsüberwachung,
- Ultraschall-Rauscherkennung,
- Ultraschall-Strömung,
- Infrarot-Thermografie und
- Sichtprüfung.

Die Prozesswerte 16, welche von dem Sensor 15 gemessen werden, werden an den Computer 4 gesendet, welche dazu ausgelegt ist, die Prozesswerte zu analysieren, wie es im Verfahren zur Vorhersage eines Wartungszustandes beschrieben ist. Der Computer 4 kann auch feststellen, ob ein ungesunder Zustand vorliegen und ein Warnsignal erzeugen, das bspw. über einen Lautsprecher akustisch oder auf einer Anzeigeeinrichtung in Form eines Bildes und/oder Textes ausgegeben wird.

Die Prozesswerte 16 werden über einen exponentiell gewichteten geglätteten Durchschnitt beim Computer 4 vorverarbeitet.

Die Prozesswerte werden hier bspw. dreimal täglich gemessen, d. h. zwischen den Messwerten ist ein zeitlicher Abstand von 8 Stunden.

Der Computer 4 ist verknüpft mit einer Warnausgabe 17. Die Warnausgabe 17 informiert einen Nutzer, wenn ein Wartungszustand vom Computer 4 erkannt wurde. In diesem Ausführungsbeispiel ist die Warnausgabe 17 eine Benachrichtigungsvorrichtung, die eine E-Mail an einen vorgesehenen Nutzer schickt.

Nachfolgend wird das Verfahren zum Vorhersagen eines Wartungszustandes einer Druckmaschine an einem bestimmten Zeitpunkt erläutert.

Das Verfahren beginnt mit Schritt S1 (Figur 1).

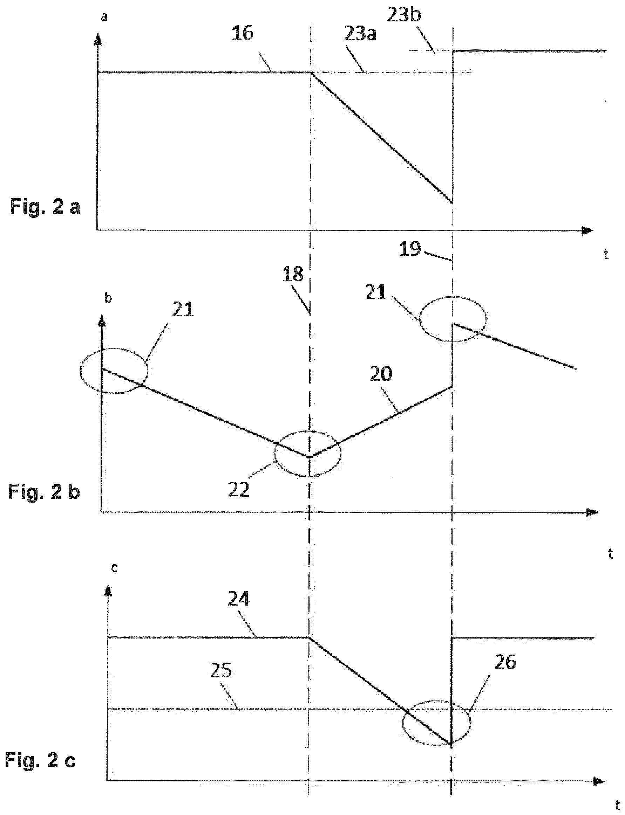

Im nächsten Schritt (S2) wird der Prozesswert 16 vom Sensor 15 erfasst (Figur 2). Da in diesem Ausführungsbeispiel der Prozesswert 16 die Rotationsgeschwindigkeit der Pumpe, welche über den aufzunehmenden Strom indirekt bestimmt wird.

Der zeitliche Abstand zwischen zwei Messaufnahmen beträgt in diesem Ausführungsbeispiel acht Stunden.

Die ermittelten Prozesswerte 16 werden zusammen mit einem Zeitstempel vom Computer 4 aufgenommen.

Der Pumpenrotation bleibt üblicherweise konstant, außer es tritt eine Verstopfung der Pumpe ein, ab dessen Zeitpunkt die Gesundheit der Pumpe nach und nach abnimmt. Ein solcher langsamer Verschleiß ist durch ein Absinken der Rotationsgeschwindigkeit detektierbar, welches zum Zeitpunkt 18 in der Figur 2 dargestellt ist. Ein Austausch einer Pumpe, also eine Wartung, geschieht zum Zeitpunkt 19.

In Schritt S3 wird ein Streuungswert 20 bestimmt, welcher die Streuung der gemessenen Prozesswerte 16 innerhalb eines vorbestimmten Zeitbereiches beschreiben. In diesem Ausführungsbeispiel ist der Streuungswert 20 die Standardabweichung der EBMA-geglätteten Prozesswerte 16. Hierbei wird die Standardabweichung der letzten 100 Werte (d. h. der letzten 33 Tage) gewählt.

Es folgt Schritt S4, in dem die Streuungsextrema bestimmt werden.

Hierbei wird zunächst ein Streuungsmaximum identifiziert. Ein Streuungsmaximum 21 entsteht, wenn sich die Prozesswerte 16 innerhalb kurzer Zeit stark ändern, oder wenn ein Verfahren ganz neu beginnt. In der Figur 2 sind so zwei Streuungsmaxima 21 zu erkennen, dass eine ist beim Beginn des Verfahrens auf der linken Seite das zweite nach einem Austausch der Pumpe zu erkennen.

Während eines Verfahrensdurchganges wird nur nach einem Maximum und nach einem Minimum gesucht. Es werden nicht mehrere Maxima oder Minima gesucht.

Liegen mehrere Streuungsmaxima 21 vor, wird das zeitlich jüngste Streuungsmaximum 21 gewählt. Wurde in der Kurve kein Streuungsmaximum 21 erkannt, wird der zeitliche Nullpunkt, also der Start des Verfahrens als Maximum festgelegt.

Ein Streuungsminimum 22 befindet sich zeitlich hinter einem Streuungsmaximum 21. Das führt dazu, dass das Streuungsmaximum 22 als eine Art Nullung des Verfahrens fungiert. Werte vor einem Maximum werden somit nicht berücksichtigt.

Der Zeitpunkt eines Streuungsminima 22 entspricht einem Zeitpunkt, indem die Prozesswerte 16 über eine gewisse Dauer stabil sind. Je stabiler die Prozesswerte 16 sind, desto weniger Ausreißer gibt es bei den Prozesswerten 16 und desto kleiner ist der Streuungswert 20 und damit desto ausgeprägter ist das Minimum des Streuungswertes 22.

Stabile Prozesswerte 16 kennzeichnen eine gesunde Maschine, d. h. der Prozesswert 16 liegt in einem Optimum und ein Wartungszustand ist nicht zu erwarten.

Im folgenden Schritt (S5) wird eine Basislinie 23a, 23b bestimmt, in dem ein Basislinienwert festgelegt wird, der mit dem Wert des Prozessparameters 16 zum Zeitpunkt des lokalen Minimums 22 korreliert und der sich bis zu einer erneuten Bestimmung einer Basislinie 23a, 23b nicht ändert.

Im vorliegenden Ausführungsbeispiel erfolgt die Korrelation, indem als Basislinienwert der Wert des Prozesswertes zum Zeitpunkt des Minimums 22 gewählt wird. Es sind jedoch auch andere Korrelationen möglich, welche in der Regel eine Funktion des Prozesswertes zum Zeitpunkt des Minimums 22 sind.

Danach wird in Schritt S6 ein Gesundheitswert 24 bestimmt. In diesem Ausführungsbeispiel ist der Gesundheitswert die Differenz des Prozesswertes 16 zum Basislinienwert 23a multipliziert mit einem skalaren Normierungsfaktor, der den Gesundheitswert auf 100% festlegt, wenn der Prozesswert 16 und der Basislinien Wert 23a übereinstimmen. 0% entspricht dann eine vorgegebene Abweichung von Prozesswert 16 und der Basislinien Wert 23a. Grundsätzlich wird mit dem Gesundheitswert die Abweichung, welche normiert oder gewichtet sein kann, von der Basislinie bestimmt und je stärker die Abweichung ist, desto schlechter ist die "Gesundheit" und desto wahrscheinlicher ist ein Wartungszustand.

Im anschließenden Schritt S7 wird abgefragt, ob ein Schwellenwert 25 überschritten wurde. Dieser Schwellenwert wurde im Vorhinein festgelegt und liegt in diesem Ausführungsbeispiel bei n sigma, wobei n vorzugsweise 1; 1,5; 2; 2,5 oder 3 ist. Zwei sigma entsprechen 13,6%. Der Schwellwert wird in der Figur 2 im letzten Drittel des Zeitraums zwischen dem Gesundheitsabfall und dem Austausch der Pumpe überschritten.

Wurde kein Überschreiten des Schwellwertes 25 festgestellt, wird erneut ein Prozesswert erfasst (Schritt S2).

Wurde jedoch ein Überschreiten des Schwellwertes 25 erfasst, so wird dies als Wartungszustand 26 beurteilt und im folgenden Schritt S8 wird eine Warnung ausgegeben, dass ein Wartungszustand 26 vorliegt.

Das Verfahren endet mit Schritt S9.

In anderen Ausführungsbeispielen kann die Warnausgabe 6 auch als eine akustischen Signalgeber oder als Leuchte ausgebildet sein, die leuchtet, sobald ein Wartungszustand vorliegt. Eine Kombination ist hier möglich.

## Patentansprüche

1. Verfahren zum Vorhersagen eines Wartungszustandes einer Druckmaschine an einem bestimmten Zeitpunkt,
indem folgende Schritte durchgeführt werden:
a) Messen mehrerer aufeinanderfolgende Prozesswerte eines Prozessparameters, welcher ein Indikator für die Funktionstüchtigkeit der Druckmaschine ist,
b) Bestimmen mehrerer aufeinanderfolgende Streuungswerte, welche die Streuung der gemessenen Prozesswerte innerhalb eines vorbestimmten Zeitbereiches beschreiben,
c) Bestimmen eines lokalen Streuungsminimums der Streuungswerte,
d) Bestimmen einer Basislinie, indem ein Basislinienwert festgelegt wird, der mit dem Wert des Prozessparameters zum Zeitpunkt des lokalen Minimums korreliert und der sich bis zu einer erneuten Bestimmung einer Basislinie nicht ändert, und
e) Bestimmung eines Gesundheitswertes an einem bestimmten Zeitpunkt mit einer vorbestimmten Relation des Prozesswertes zu dem Basislinienwert zu diesem Zeitpunkt,
wobei beim Überschreiten eines vorbestimmten Schwellwertes durch den Gesundheitswert dies als Wartungszustand beurteilt wird.

2. Verfahren nach Anspruch 1
**dadurch gekennzeichnet,**
**dass** vor der Bestimmung des lokalen Streuungsminimums ein lokales Streuungsmaximum der Streuungswerte bestimmt wird, wobei, wenn kein Maximum erkannt wurde, der frühste Zeitpunkt in den Streuungswerten als Maximum festgesetzt wird,
und **dass** das zu bestimmende Streuungsminimum zeitlich nach dem Maximum kommt.

3. Verfahren nach Anspruch 1 oder 2
**dadurch gekennzeichnet,**
**dass** das Verhältnis des Prozesswerte zu dem Basislinienwert zur Bestimmung des Gesundheitswertes gegeben ist durch:
- die Differenz der beiden Werte,
- durch eine nicht-linearen Funktion oder
- durch Zuordnung aus einer vorab hinterlegten Tabelle.

4. Verfahren nach einem der Ansprüche 1 bis 3
**dadurch gekennzeichnet,**
**dass** der Streuungsparameter die Standartabweichung ist.

5. Verfahren nach einem der Ansprüche 1 bis 4
**dadurch gekennzeichnet,**
**dass** die Prozesswerte EWMA (exponentially weighted moving average)geglättet sind.

6. Verfahren nach einem der Ansprüche 1 bis 5
**dadurch gekennzeichnet,**
**dass** der bestimmte Bereich die letzten Werte im Vergleich zu dem bestimmten Zeitpunkt darstellen, vorzugsweise die letzten 10.000 Werte, vorzugsweise die letzten 1.000 Werte, vorzugsweise die letzten 100 Werte und insbesondere vorzugsweise die letzten 10 Werte umfasst.

7. Verfahren nach einem der Ansprüche 1 bis 6
**dadurch gekennzeichnet,**
**dass**, wenn mehrere Minima erkannt wurden, ein Minima festgesetzt wird,
indem das zeitlich älteste Minima gewählt wird, oder
indem das Minima gewählt wird, bei dem der dazu korrespondierende Prozesswert auf eine gesündere Maschine hinweist.

8. Verfahren nach einem der Ansprüche 1 bis 7
**dadurch gekennzeichnet,**
**dass**, wenn kein Minima erkannt wurden, der Zeitpunkt des kleinsten Wertes des Streuungsparameters gewählt wird.

9. Verfahren nach einem der Ansprüche 1 bis 8
**dadurch gekennzeichnet,**
**dass** das Minima unter einem bestimmten Schwellwert liegen muss, wobei dieser Schwellwert, sofern der Streuungsparameter der Standartabweichung entspricht, vorzugsweise einer Standartabweichung von 10, vorzugsweise einer Standartabweichung von 5 und insbesondere einer Standartabweichung von 2 entspricht.

10. Verfahren nach einem der Ansprüche 1 bis 9
**dadurch gekennzeichnet,**
**dass** der Gesundheitswert durch Multiplikation mit einem vordefinierten Skalierungsfaktor normiert wird, wodurch der Gesundheitswert bei 100 eine normal funktionierende Druckmaschine angibt und ein niedrigerer Wert auf einen bevorstehenden Wartungsausfall der Druckmaschine hinweist.

11. Verfahren nach einem der Ansprüche 1 bis 10
**dadurch gekennzeichnet,**
**dass** das Verfahren unterschiedliche Wartungszustände mit unterschiedlichen vorbestimmten Schwellwerten aufweist.

12. Druckmaschine mit einer Steuereinrichtung zum Vorhersagen eines Wartungszustandes, wobei die Steuereinrichtung zum Ausführen eines Verfahrens nach einem der Ansprüche 1 bis 11 ausgebildet ist.
